# EUROPEAN PATENT SPECIFICATION

(11) **EP 3 024 704 B1**
(45) Date of publication and mention of the grant of the patent: **16.01.2019**
(21) Application number: 14830172.4
(22) Date of filing: 21.07.2014
(51) Int. Cl.: B60R 16/02, B60L 11/18, B60W 10/26, B60K 6/28, H01M 2/10, B60R 16/023, B60R 16/033, H01M 2/20, H01R 13/6581, H01R 13/74

(54) **HIGH VOLTAGE ELECTRICAL CENTER INCLUDING A BULKHEAD**
ELEKTRISCHES HOCHSPANNUNGSZENTRUM MIT STECKER-AUSGESTATTET SCHOTT
DISTRIBUTION ÉLECTRIQUE HAUTE TENSION COMPORTANT UNE PAROI ÉQUIPÉE DE CONNECTEURS

(30) Priority: 25.07.2013 US 201361858287 P
(43) Date of publication of application: 01.06.2016
(73) Proprietor: Aptiv Technologies Limited, St. Michael (BB)
(72) Inventor: EICHORN, Daniel S., Rochester Hills, MI 48309 (US)
(74) Representative: Robert, Vincent
(86) International application number: PCT/US2014/047352
(87) International publication number: WO 2015/013158

(56) References cited:
- CN-A- 103 117 365
- CN-U- 202 487 998
- CN-U- 202 487 998
- JP-A- 2001 145 212
- US-A1- 2008 193 832
- US-A1- 2009 137 150
- US-A1- 2012 244 398

## Description

### BACKGROUND OF THE INVENTION

Full electric and hybrid electric vehicles are equipped with a battery pack contained in a conductive housing, typically a metal box. The flow of power to and from the battery is switched on and off by and routed through a high voltage electrical center containing electrical devices such as relays, precontactors, fuses, and circuit boards. Among the functions of the housing is providing EMI shielding to and from these electrical devices. Shielded cables routed to vehicle devices powered by the battery must pass through the walls of the housing. Apertures that allow passage of cables through the walls of the housing must not reduce the shielding effectiveness of the box.

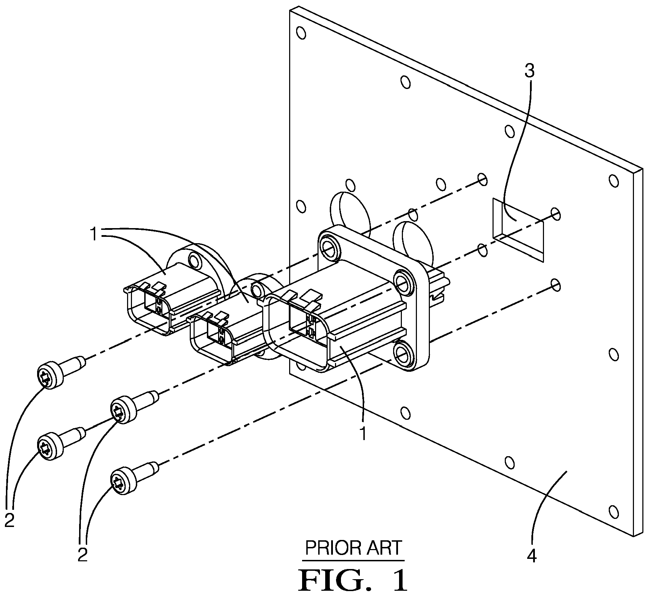

In some prior art battery packs, connector headers 1 were mounted by threaded fasteners 2 to a pattern of holes 3 cut through the wall 4 of the housing as shown in Fig. 1. The shielded header connectors 5 contained a conductive shield or "can" (not shown) which makes electrical contact to the conductive battery pack housing and the mating shielded connector thus closing or maintaining an electromagnetic shield over the connecting elements of the shielded connector.

Document CN202487998U shows a conventional connector assembly.

A problem mentioned in the background section or associated with the subject matter of the background section should not be assumed to have been previously recognized in the prior art. The subject matter in the background section merely represents different approaches, which in and of themselves may also be inventions.

### BRIEF SUMMARY OF THE INVENTION

According to the present invention as defined in independent claim 1, an electrical connector assembly is provided. The electrical connector assembly includes a bulkhead configured to be received within an aperture defined by a housing formed of a conductive metallic material. This housing defines a cavity containing a plurality of electrical devices. The bulkhead includes a plurality of electrical connectors that are configured to receive and mate with a plurality of corresponding mating connectors. The bulkhead defines a plurality of connector shrouds that axially surround each connector in the plurality of electrical connectors. Each connector shroud is configured to receive a connector body of a corresponding mating connector. The plurality of connector shrouds is integral to the bulkhead. The plurality of electrical connectors is configured to be electrically connected to the plurality of electrical devices.

The bulkhead, and thereby the plurality of connector shrouds, is formed of a composite conductive material. The bulkhead is attached to the housing by a conductive fastener. The composite conductive material contains electrically conductive fibers within a dielectric matrix material.

Further features and advantages of the invention will appear more clearly on a reading of the following detailed description of the preferred embodiment of the invention, which is given by way of non-limiting example only and with reference to the accompanying drawings.

### BRIEF DESCRIPTION OF THE SEVERAL VIEWS OF THE DRAWING

The present invention will now be described, by way of example with reference to the accompanying drawings, in which:
Fig. 1 is an exploded perspective view of bulkhead and connectors of a high voltage electrical center in accordance with the prior art;
Fig. 2 is a perspective view of a high voltage electrical center in accordance with one embodiment; and
Fig. 3 is an exploded perspective view of the inner surface of the bulkhead of the high voltage electrical center of Fig. 2 in accordance with one embodiment; and
Fig. 4 is an exploded perspective view of a battery pack module including the high voltage electrical center of Fig. 2 in accordance with one embodiment.

### DETAILED DESCRIPTION OF THE INVENTION

A high voltage electrical center containing electrical devices such as relays, precontactors, fuses, and circuit boards and including headers molded from a conductive plastic to form a connectorized bulkhead is presented herein. This high voltage electrical center is mounted to and incorporated into an electric vehicle battery pack and contains the switching circuitry used to control high voltage connections between the battery pack and the vehicle's electrical propulsion system. This high voltage electrical center reduces the number of unique components required compared to the prior art. This high voltage electrical center also reduces the overall assembly effort required to construct the battery pack compared to the prior art. Additionally the high voltage electrical center may be included as part of the battery housing assembly thereby eliminating cables required by the prior art.

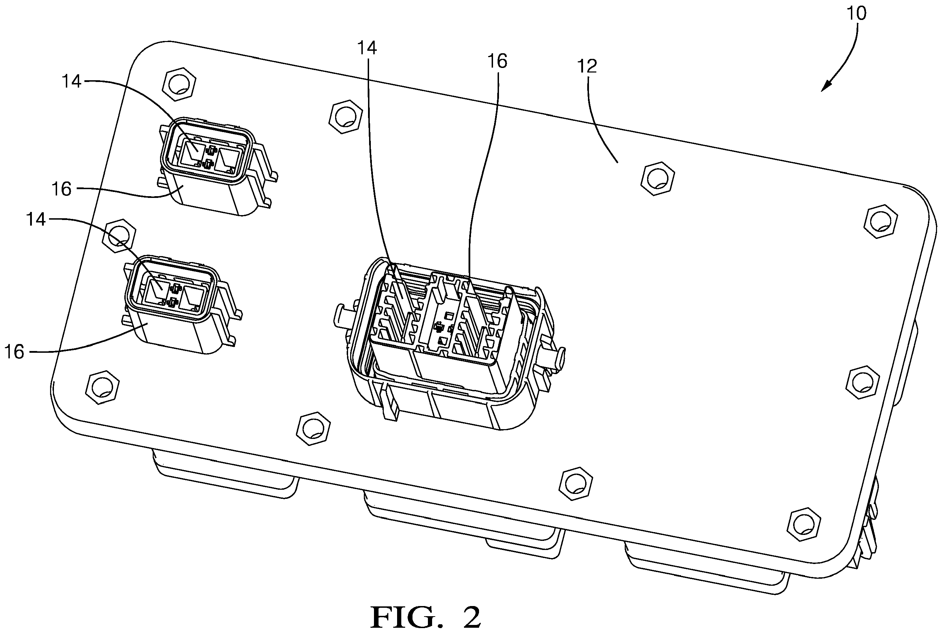

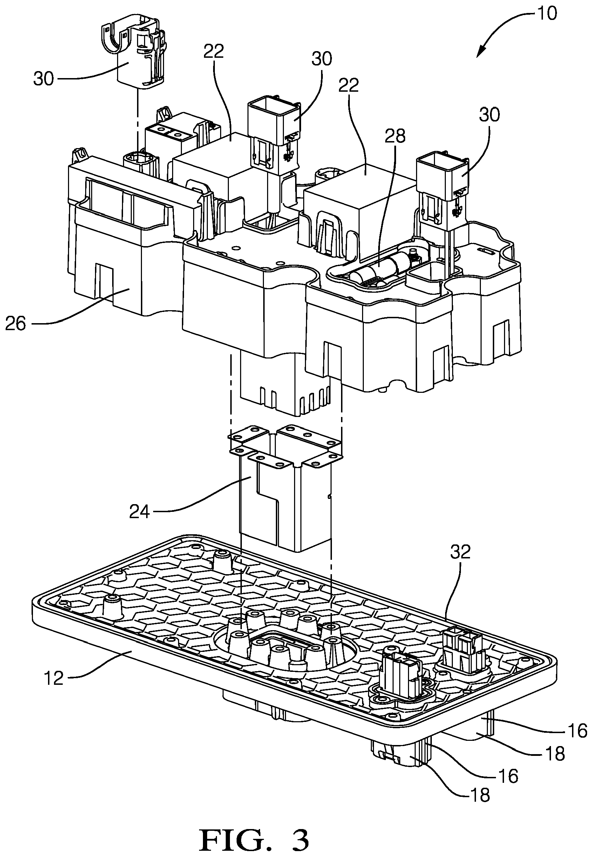

Fig. 2 illustrates a non-limiting example of an electrical assembly, such as high voltage electrical center (HVEC), generally designated by reference number 10. The assembly 10 includes a connector bulkhead 12 having a number of electrical connectors 14 that are configured to mate with corresponding mating electrical connectors(not shown) in order to interconnect the assembly 10 to the vehicle electrical propulsion system (not shown). The bulkhead 12 defines a number of connector shrouds or headers 16 that axially surround each of the assembly's electrical connectors 14. As shown in Fig. 3, these headers 16 are configured to receive the connector bodies 18 of the corresponding mating connectors. The headers 16 are integrally formed with the bulkhead 12.

The bulkhead 12 and headers 16 are formed of a conductive composite material, for example nickel plated carbon or stainless steel fibers in a PA, acrylonitrile butadiene styrene (ABS), or polycarbonate (PC) matrix. Such materials are available from ElectriPlast Corporation of Fort Washington, Pennsylvania. The bulkhead 12 may be formed by a process such as injection molding.

As shown in Figs. 3, the assembly 10 also includes an electromagnetic shield 24 or "can" that is formed of a conductive material, such as a stamped and folded metal sheet. The electromagnetic shield 24 is disposed within the connector headers 16 of the bulkhead 12 and is configured to interconnect to a corresponding electromagnetic shield in the corresponding connector, thereby providing shielding for the conductive elements of the connector and the corresponding mating connector. Because the headers 16 of the bulkhead 12 are conductive, they can provide electromagnetic shielding to the conductive elements of the connector and the corresponding mating connector. The design, materials, and fabrication methods of forming the electromagnetic shield 24 are well known to those skilled in the art.

As shown in Figs. 3, the assembly 10 includes a case 26 configured to contain the high voltage switching devices 22, as well as fuses 28, internal connectors 30, wiring (not shown), bus bars (not shown), bolts (not shown), nuts (not shown), terminal position assurance (TPA) devices (not shown), sensors (not shown), and other components in the assembly 10. The case 26 is formed of a thermoplastic material, for example a PBT or a NYLON material.

The assembly 10 also includes a compliant seal 32 to provide an environmental seal between the assembly 10 and the battery pack housing. The seal 32 may be co-molded with the bulkhead 12.

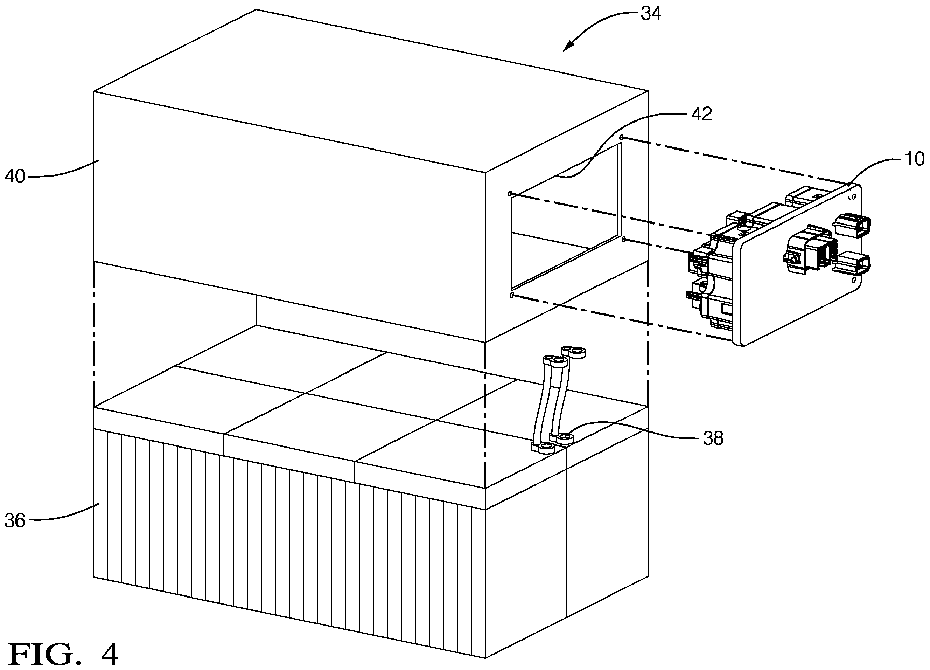

As illustrated in Fig. 4, the assembly 10 may be integrated into a battery pack module 34 of an electrical or hybrid electrical vehicle. The battery pack module 34 contains a number of battery modules 36 that are interconnected to provide a greater voltage and or current capacity than any of the battery modules 36 separately. The battery modules 36 are interconnected by a wiring harness 38 or bus bar configuration. The battery modules 36 are contained within a housing 40 formed of a conductive material, such as aluminum, that encloses the modules 36 and provides environmental protection, electrical isolation, and electromagnetic shielding for/from the battery modules 36. The housing 40 defines an aperture 42 in which the assembly 10 is received. The wiring harness/buss bar 38 of the battery pack is electrically connected to the assembly 10. The electrical devices (e.g. relays, precontactors) of the assembly 10 control the flow of electrical power to and from the battery modules 36 in the battery pack. The assembly 10 also provides the shielded electrical connections for the battery pack to electrical propulsion system and control electronics.

Accordingly, an electrical assembly 10, such as a high voltage electrical center, having a bulkhead 12 with integrally formed connector headers 16 is provided. The bulkhead 12 provides the advantage of reducing the number of unique components in the assembly 10 and reducing the assembly time needed to attach separate headers to the bulkhead 12 as used in the prior art. Molding the bulkhead 12 from conductive plastic also allows for more complex geometry to contain electromagnetic energy within the battery pack case. It also more easily allows the formation of a groove to contain the seal 32 in the bulkhead 12 and/or allows the seal 32 to be co-molded with the bulkhead 12.

While this invention has been described in terms of the preferred embodiments of a high voltage electrical center, it is not intended to be so limited, but rather only to the extent set forth in the claims that follow. Moreover, the use of the terms first, second, etc. does not denote any order of importance, but rather the terms first, second, etc. are used to distinguish one element from another. Furthermore, the use of the terms a, an, etc. do not denote a limitation of quantity, but rather denote the presence of at least one of the referenced items.

## Claims

1. Electrical connector assembly (10), comprising:
a bulkhead (12) configured to be received within an aperture defined by a housing formed of a conductive metallic material, said housing defining a cavity containing a plurality of electrical devices, said bulkhead (12) including a plurality of electrical connectors (14) configured to receive and mate with a plurality of corresponding mating connectors, wherein said bulkhead (12) defines a plurality of connector shrouds (16) that axially surround each connector in the plurality of electrical connectors (14), each connector shroud (16) configured to receive a connector body of a corresponding mating connector, wherein said plurality of connector shrouds (16) is integral to the bulkhead (12) and wherein the plurality of electrical connectors (14) is configured to be electrically connected to said plurality of electrical devices, wherein the bulkhead (12), and thereby the plurality of connector shrouds (16), is formed of a composite conductive material.

2. Electrical connector assembly according to claim 1, wherein the bulkhead (12) is attached to the housing by a conductive fastener.

3. Electrical connector assembly according to claim 2, wherein the composite conductive material contains electrically conductive fibers within a dielectric matrix material.

## Patentansprüche

1. Elektrische Verbinderanordnung (10), die aufweist:
eine Trennwand (12), die konfiguriert ist zur Aufnahme in einer Öffnung, die durch ein aus einem leitfähigen metallischen Material gebildetes Gehäuse definiert ist, wobei das Gehäuse einen Hohlraum definiert, der eine Vielzahl von elektrischen Vorrichtungen enthält, wobei die Trennwand (12) eine Vielzahl von elektrischen Verbindern (14) umfasst, die konfiguriert sind zum Aufnehmen und Verbinden mit einer Vielzahl von entsprechenden Gegenverbindern, wobei die Trennwand (12) eine Vielzahl von Verbinderumhüllungen (16) definiert, die jeden Verbinder der Vielzahl von elektrischen Verbindern (14) axial umgeben, wobei jede Verbinderumhüllung (16) konfiguriert ist zum Aufnehmen eines Verbinderkörpers eines entsprechenden Gegenverbinders, wobei die Vielzahl von Verbinderumhüllungen (16) integral mit der Trennwand (12) sind und wobei die Vielzahl von elektrischen Verbindern (14) konfiguriert sind, mit der Vielzahl von elektrischen Vorrichtungen elektrisch verbunden zu werden, wobei die Trennwand (12) und dadurch die Vielzahl von Verbinderumhüllungen (16) aus einem leitfähigen Verbundmaterial gebildet sind.

2. Elektrische Verbinderanordnung gemäß Anspruch 1, wobei die Trennwand (12) an dem Gehäuse durch eine leitfähige Befestigungseinrichtung angebracht ist.

3. Elektrische Verbinderanordnung gemäß Anspruch 2, wobei das leitfähige Verbundmaterial elektrisch leitfähige Fasern in einem dielektrischen Matrixmaterial enthält.

## Revendications

1. Ensemble formant connecteur électrique (10), comprenant :
une cloison (12) configurée pour être reçue à l'intérieur d'une ouverture définie par un boîtier formé d'un matériau métallique conducteur, ledit boîtier définissant une cavité contenant une pluralité de dispositifs électriques, ladite cloison (12) incluant une pluralité de connecteurs électriques (14) configurés pour recevoir et s'accoupler avec une pluralité de connecteurs appariés correspondants, dans lequel ladite cloison (12) définit une pluralité de chemises de connecteur (16) qui entourent axialement chaque connecteur dans la pluralité de connecteurs électriques (14), chaque chemise de connecteur (16) étant configurée pour recevoir un corps de connecteur d'un connecteur apparié correspondant, dans lequel ladite pluralité de chemises de connecteur (16) sont formées de manière intégrale avec la cloison (12) et dans lequel la pluralité de connecteurs électriques (14) sont configurés pour être connectés électriquement à ladite pluralité de dispositifs électriques, dans lequel la cloison (12), et avec celle-ci la pluralité de chemises de connecteur (16), est formée d'un matériau conducteur composite.

2. Ensemble formant connecteur électrique selon la revendication 1, dans lequel la cloison (12) est attachée au boîtier par un élément de fixation conducteur.

3. Ensemble formant connecteur électrique selon la revendication 2, dans lequel le matériau conducteur composite contient des fibres électriquement conductrices à l'intérieur d'un matériau de matrice diélectrique.
